# EUROPEAN PATENT APPLICATION

(11) **EP 4 641 350 A1**
(43) Date of publication of application: **29.10.2025**
(21) Application number: 24305643.9
(22) Date of filing: 25.04.2024
(51) Int. Cl.: G06F 1/32, G06F 1/3206, G06F 1/3212, G06F 1/3234, G06F 1/324, G06F 1/3246, G06F 1/3287, G06F 1/329

(54) **PLATFORM FOR INTERMITTENT COMPUTING**

(71) Applicant: Centre National de la Recherche Scientifique, 75016 Paris (FR); Université de Lorraine, 54000 Nancy (FR)
(72) Inventor: Jovanovic, Slavisa, VANDOEUVRE-LES-NANCY (FR)
(74) Representative: Bandpay & Greuter

(57) **Abstract**

The disclosure notably relates to a platform (100) for intermittent computing powered by at least one energy source. The platform comprises a non-volatile memory (118). The platform comprises a microcontroller (120) configured for power management of the at least one energy source and for determining a level of available energy. The platform comprises a System-on-Chip (SoC) component comprising a reprogrammable logic (118). The reprogrammable logic comprises an application layer (202) comprising operational blocks implementing one or more applications. The reprogrammable logic comprises an intermittent computing layer (204) configured for executing intermittently the one or more applications of the application layer depending on the determined level of available energy by regularly saving and restoring information from the application layer on the non-volatile memory. Such a platform presents an improved solution of energy-independent and sustainable by design system capable of performing complex processing.

## Description

### TECHNICAL FIELD

The disclosure relates to the field of intermittent computing, and more specifically to a platform for intermittent computing, and to a computer program for programming said platform.

### BACKGROUND

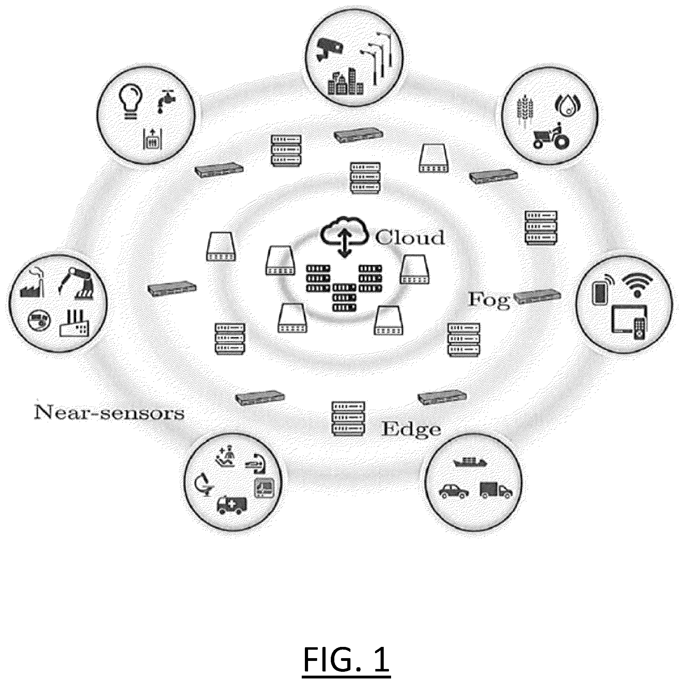

Today's fourth industrial revolution, often referred to as the intelligence revolution, is marked by the development and ubiquity of technologies such as artificial intelligence (Al), Big Data (BD) and the Internet of Things (IoT). These technologies are not only the source of an enormous quantity of continuously generated data of all kinds (IoT and BD), but also demand this data (Al and BD) in order to extract information useful for intelligent and automatic decision-making (actionable insights) in a wide range of application fields. Demanding high computing and storage capacities, these technologies are generally implemented in remote data centers (cloud), to which all data is routed (see FIG. 1).

However, this centralized processing paradigm, where all generated data, whatever its origin, is routed to cloud data centers, has limits, particularly for applications requiring rapid decision-making and very short reaction times, such as autonomous vehicles, smart grids, real-time road traffic management, telemetry and surveillance, machine vision and so on. For these applications, it is preferable to process collected data at the extremities of this complex infrastructure, i.e. in the fog and edge layers, and as close as possible to the sensors and acquisition systems.

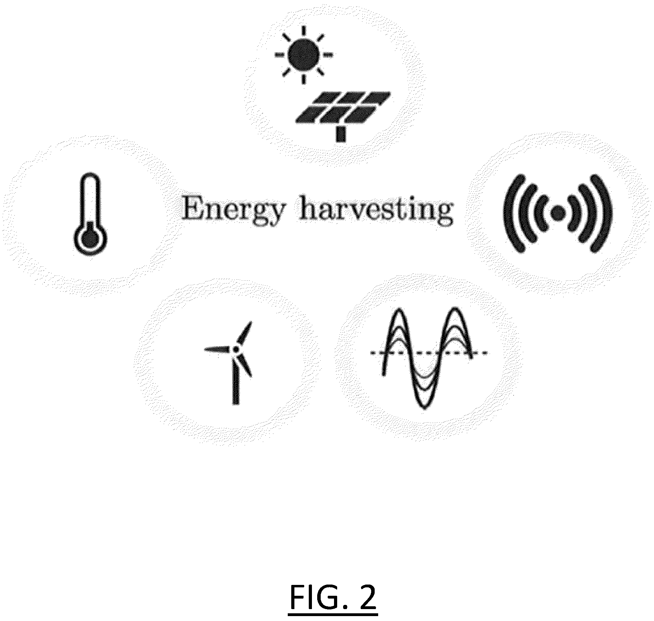

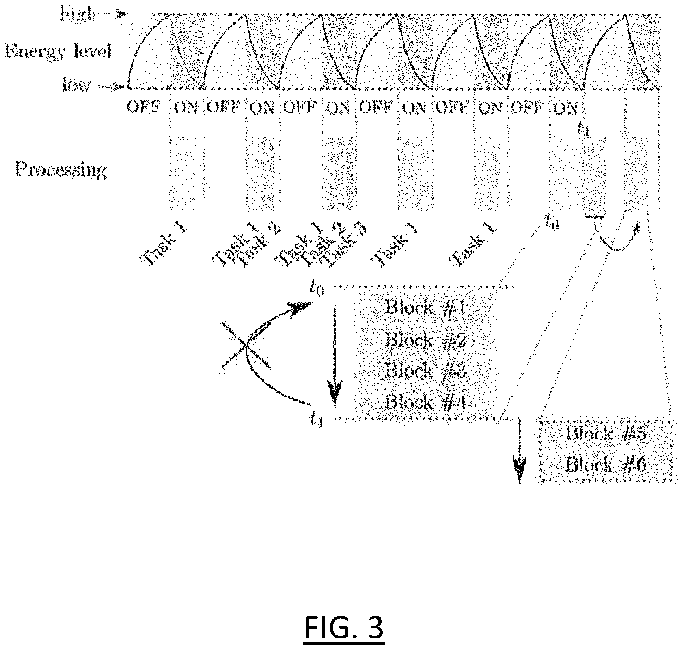

Moreover, the technologies of the intelligence revolution are generally implemented on systems using traditional processing approaches, where the power and energy supply is considered to be continuous and uninterrupted. However, the supply of a clean, renewable energy has also become a major factor in system design, and these can be powered directly by harvested ambient energy (of whatever type). Energy harvesting, where potential sources of ambient energy such as solar, thermal, mechanical (vibratory), electromagnetic or other types of energy are used either as primary or backup energy supply solutions, is an example of a solution that has been developed in recent years to increase the energy autonomy of systems (see FIG. 2). Given the intermittent and uncertain nature of energy availability in the environment surrounding such systems, these traditional design approaches are no longer appropriate. Indeed, for applications characterized by high complexity (a large number of computational operations), the execution time for all the operations required before providing a usable result is longer, and often incompatible with the total energy level available to the system at any given time (see FIG. 3).

Within this context, there is still a need for an improved solution of energy-independent system capable of performing complex processing.

### SUMMARY

It is therefore provided a platform for intermittent computing powered by at least one energy source. The platform comprises a non-volatile memory. The platform comprises a microcontroller configured for power management of the at least one energy source and for determining a level of available energy. The platform comprises a System-on-Chip (SoC) component comprising a reprogrammable logic. The reprogrammable logic comprises an application layer comprising operational blocks implementing one or more applications. The reprogrammable logic comprises an intermittent computing layer configured for executing intermittently the one or more applications of the application layer depending on the determined level of available energy by regularly saving and restoring information from the application layer during the execution of the one or more applications on the non-volatile memory.

The platform may comprise one or more of the following:
- The intermittent computing layer is further configured for communicating with the microcontroller to obtain the determined level of available energy;
- The saving is performed regularly at a given frequency. The given frequency depends on the level of available energy determined by the microcontroller;
- The executing intermittently of the one or more applications comprises iteratively stopping and restarting the execution of the one or more applications. Each restarting comprises:
   ∘ determining the latest information about the execution of the one or more applications saved on the non-volatile memory; and
   ∘ providing the determined latest information to the application layer so as to restart the execution of the one or more applications at the time of the last saving;
- The platform further comprises a cold-start circuit connected to the at least one energy source. The cold-start circuit is configured for, at each start-up, providing an initial supply of energy for restarting the microcontroller;
- The cold-start circuit comprises a storage energy component configured for, after each stopping of the execution of the one or more applications, storing energy from the at least one energy source. The initial supply of energy provided to the microcontroller is the energy stored in the energy component;
- After the restarting of the microcontroller, the microcontroller is configured for starting the SoC component when the determined level of available energy is stable and regulated;
- The cold-start circuit is deactivated by the microcontroller after each restarting of the microcontroller;
- The cold-start circuit remains activated after each restarting of the microcontroller. The cold-start circuit is configured for participating to the power management of the at least one energy source;
- The intermittent computing layer is further configured for slowing down or speeding up calculation in the application layer for the execution of the one or more applications depending on the determined level of available energy;
- The at least one energy source comprises several energy sources. Each energy source may contribute to the overall energy of the platform. The platform further comprises a power multiplexer connected to the several energy sources, the power multiplexer being configured for extracting energy from the several energy sources (e.g., selecting one energy source from the several energy sources) by time multiplexing them;
- The platform further comprises DC/DC converter circuits configured for maximum power point tracking (MPPT) and regulating the operating voltage of the SoC component and the non-volatile memory; and/or
- The reprogrammable logic is an FPGA/SoC component.

It is further provided a computer program comprising instructions, which, when executed by a computer, cause the computer to carry out a computer-implemented method for programming the application layer of the said platform.

It is further provided a computer readable storage medium having recorded thereon the said computer program.

### BRIEF DESCRIPTION OF THE DRAWINGS

Non-limiting examples will now be described in reference to the accompanying drawings, where:
- FIG. 1 shows an example of an loT/cloud data center infrastructure;
- FIG. 2 shows examples of potential sources of ambient energy;
- FIG. 3 illustrates the unsuitability of current solutions to process heavy (compute demanding) task;
- FIG. 4 shows an example of the platform;
- FIG. 5 shows a flowchart of an example of the restarting of the platform;
- FIG.s 6 and 7 illustrate an example of the layers built upon the used reprogrammable logic; and
- FIG. 8 illustrates an example of intermittent computing by the platform.

### DETAILED DESCRIPTION

It is provided a platform for intermittent computing powered by at least one energy source. The platform comprises a non-volatile memory. The platform comprises a microcontroller configured for power management of the at least one energy source and for determining a level of available energy. The platform comprises a System-on-Chip (SoC) component comprising a reprogrammable logic. The reprogrammable logic comprises an application layer with operational blocks implementing one or more applications. The reprogrammable logic comprises an intermittent computing layer configured for executing intermittently the one or more applications of the application layer depending on the determined level of available energy by regularly saving and restoring information from the application layer during the execution of the one or more applications on the non-volatile memory.

Such a platform presents an improved solution of energy-independent and sustainable by design system capable of performing complex processing.

Notably, the platform allows executing intermittently the one or more applications of the application layer. Indeed, by regularly saving the context (all relevant data needed to resume it) of the running application, the platform allows the operations performed in these interrupted applications to be resumed at the state of progress they were in at the time of power shutdown. In particular, the non-volatile memory allows to retain the saved context during the power shutdowns when there is insufficient energy to run out the platform.

Moreover, the platform is energy self-sufficient, enabling applications to run autonomously. Indeed, the platform is powered by the at least one energy source, and the microcontroller is configured to manage and determine the energy level of this at least one energy source. The platform thus enables the use of intermittent energy sources (e.g., ambient energy source such as solar, thermal, mechanical, electromagnetic or other types of energy) to run the one or more applications. As mentioned above, this is particularly interesting for solutions requiring rapid decision-making and very short reaction times (such as autonomous vehicles, smart grids, real-time road traffic management, telemetry and surveillance, machine vision, etc.), as processing can be carried out in close proximity to sensors and acquisition systems.

Furthermore, the platform offers particularly broad implementation possibilities. Indeed, the SoC component includes a reprogrammable logic, which can be easily reprogrammed to run any type of application. The platform is therefore not limited to a particular use and can be programmed to realize different functionalities with ease. In particular, the intermittent computing layer is decoupled from the application layer, so that the user is able to add or remove applications from the application layer easily, without having to adapt them for intermittent computing. The intermittent executing of the applications that the application layer includes is handled automatically by the independent intermittent computing layer. This makes the platform particularly easy to implement.

The platform is powered by at least one energy source. Each energy source powering the platform may be intermittent. For example, each energy source may be an ambient energy source such as solar, thermal, mechanical, electromagnetic or other types of energy. For example, the at least one energy source may include one or more sources of the same or different type such as solar panels and/or thermoelectic generators, or wind or water turbines, etc.

The microcontroller is configured for managing the at least one energy source. For example, the managing of the at least one energy source may comprise controlling energy extraction from the at least one energy source so that the energy supplied to the SoC component matches its operating conditions (in terms of voltage, current and/or power). The managing may for example comprise extracting the power generated by the at least one energy source and regulating the output voltage supplied to the SoC component. The extracting may comprise generating control signals required for Maximum Power Point Tracking (MPPT) extraction. In case of several energy sources, the controlling may comprise selecting the energy source(s) from all the energy sources available to power the SoC component.

The microcontroller is also configured for determining the level of available energy. The determined level of energy is the level of energy available from the at least one energy source (e.g., in total, for one source such as the one having the most of energy available and/or for each source) at a given time. This determined level of energy may be a function of time. For example, at regular time intervals, the microcontroller may determine a current level of available energy. In this way, the microcontroller may be configured to evaluate and profile the evolution of the available energy level over a period of time.

The SoC component comprises the reprogrammable logic. The reprogrammable logic by its nature may be reprogrammed after manufacture. The SoC component may comprise numerous elementary configurable logic blocs containing freely connectable combinatorial and sequential logic. The user may program the circuit before using it or at any time at his/her convenience. For example, the reprogrammable logic may be a field-programmable gate array (FPGA) component, which is a type of reconfigurable integrated circuit that can be programmed or reprogrammed after manufacturing. FPGAs may comprise an array of programmable logic blocks and interconnects that may be configured to perform various digital functions. FPGAs may be used in applications where flexibility, speed, and parallel processing capabilities are required, such as in telecommunications, automotive, aerospace, and industrial sectors.

The reprogrammable logic comprises at least two layers. The first layer is the application layer. This layer comprises the operational blocks implementing the one or more applications. The one or more application may each perform a respective function for a final application requiring rapid decision-making and very short reaction times, such as autonomous vehicles, smart grids, real-time road traffic management, telemetry and surveillance, machine vision and so on. The application layer may have been programmed according to the method for programming. The one or more applications are implemented using energy supplied by the at least one energy source or it may be done externally before the final deployment and use of the platform. The SoC component may be supplied by the at least one energy source. The microcontroller may be configured for regulating the energy provided by the at least one energy source for supplying the SoC component.

The reprogrammable logic comprises a second layer referred to as the intermittent computing layer. The intermittent computing layer is configured for executing intermittently the one or more applications of the application layer depending on the determined level of available energy. The one or more applications are executed intermittently, which means that the intermittent computing layer is configured for iteratively stopping and restarting the execution of the one or more applications according to the variation of the determined available energy level. For example, the determined available energy level may vary cyclically, from a lower energy level (e.g., zero or near zero) to a high energy level. In that case, the at least one energy source may for example include one or more solar panels, and the variations of the determined available energy level may in this case be daily, with a maximum around midday when the solar irradiance is at its highest, and a minimum at night when the solar energy is at its lowest. In that case, the one or more application may be stopped before the energy level gets too low, and restarted when it rises again. Alternatively, the at least one energy source may for example include one or more solar panels, and the one or more application may be stopped before the solar energy is not available anymore, and restarted when it becomes available again. The application(s) may all be stopped and restarted at the same time, or alternatively some application(s) may be stopped at specific time(s) and others at other time(s). For example, one or more critical applications may remain powered up when the current drops, and only really stop when the current is zero or close to zero. The intermittence in the energy supply may be at the shorter time intervals, at any time during the operation of the application. Whenever the energy levels are down or not sufficient to run successfully the application, the intermittent computing layer may, by knowing the current energy levels in real time (supplied by the microcontroller in charge of energy management), execute steps to save the current context of the application for later resuming.

To do so, the intermittent computing layer is configured for regularly saving and restoring information from the application layer during the execution of the one or more applications on the non-volatile memory. The saving may comprise a preliminary step of determining the information to be saved, and then a step of sending the determined information to the non-volatile memory for the saving. The determined information may include all the relevant data currently used by the one or more applications to operate. The saved data may be used by the applications for restoring their execution at the time of the saving and resume the previous state of progress. For example, the execution of each application may comprise running one or more respective calculations, and the generated data may include intermediate results of these one or more respective calculations and/or current parameters used in these one or more respective calculations, such as computing parameters. The saving may comprise the saving of all relevant data currently used by the application(s) currently running. The saving may be performed regularly at a given frequency (as explained below). The restoring may be performed at each restarting of the one or more applications and may comprise restoring the last saved data.

In examples, the intermittent computing layer may be further configured for communicating with the microcontroller to obtain the determined level of available energy. This communication may comprise regularly sending a command or commands to the microcontroller to send back the current energy level supplied by the one or more energy sources. For example, the microcontroller, which is in charge of energy management of the platform, may be configured for regularly recording the available energy level from all sources, and in this case may, for each command received, send back the last recorded level. Alternatively, the microcontroller may be configured for measuring the available energy level after each command from the intermittent computing layer received and send back in that case the measured energy level. After each sending of command, the communication may comprise receiving the available energy level send in return by the microcontroller. Moreover, the microcontroller may also initiate the communication with the intermittent computing layer and send all relevant data related to the current energy levels. This communication is bidirectional and may be initiated either by the microcontroller or the intermittent computing layer. That way, both parts may be aware of all relevant changes related to the energy management and indirectly guide the choice of the operations that may be executed on the application layer at a given time.

In examples, the saving is performed regularly at a given frequency. The given frequency may depend on the level of available energy determined by the microcontroller. It means that the frequency may vary as a function of the determined level of available energy. For example, the frequency of saving may increase when the determined level of energy available decreases. The frequency may vary in different ways. For example, the frequency of saving may vary discontinuously. For example, the frequency may take two predetermined values, and the frequency of saving may be the lower one when the determined level of energy available is higher than a predetermined threshold, and the higher one otherwise. Alternatively, the frequency of saving may vary progressively, e.g., according to the variations of the determined level of available energy. The way the frequency varies may depend on the one or more applications that are executed and/or on the final goal and use of the platform. The saving may therefore be not only made after an imminent restarting but may also be carried out throughout the application's operation as a safety precaution. It allows reducing the risk of losing all contents (e.g., intermediate results) in the event of a sudden power failure.

In examples, each restarting of the executing of the one or more applications may comprise the following two steps. A first step may consist in determining the latest information about the execution of the one or more applications saved on the non-volatile memory. For example, for each context saving, the information may be overwritten, meaning that only the latest information is saved, and these latest saved data may be recovered. Alternatively, the information may be dated, so that the platform may retrieve the information with the most recent date. A second step may consist in providing the determined latest information to the application layer so as to restart the executing of the one or more applications at the time of the last saving. Thus, the one or more applications may be restarted at the time of the last saving.

The stopping of the execution of the one or more applications is now discussed. The platform may be configured for stopping the SoC component after finishing the execution of the one or more application. For example, the microcontroller may stop the SoC component after finishing the execution of the one or more applications. Then, the microcontroller may also be configured for stopping its own operation. In that case, before shutting down, the microcontroller may start or configure the cold-start circuit, as explained in more details below.

In examples, the intermittent computing layer may be configured for slowing down or speeding up calculation in the application layer for the execution of the one or more applications depending on the determined level of available energy. The intermittent computing layer may be configured for adapting the calculation speed in the application layer according to the determined level of available energy. The intermittent computing layer may achieve this in a number of different ways, for example by using the circuit's internal supply voltage (the lower the voltage, the lower the power consumption) or on the operating frequency of the application layer (the lower the operating frequency, the lower the power consumption). The parameters (e.g., the calculation speed or level of parallelism) to be used at any given time may depend on the level of available power (supplied by the microcontroller) and the estimated autonomy time for calculations (based on the elements supplied by the microcontroller). These parameter changes may extend the platform's autonomy at a given moment and, above all, enable calculations in progress to be completed before the interruption due to the power failure. The interruption may be made at precise times to reduce the risk of inconsistencies between the stored data.

The intermittent computing layer regularly saves the information from the application layer on the non-volatile memory. The non-volatile memory is any hardware adapted for such storage, possibly comprising several physical distinct parts (e.g. one for the program, and possibly one for the data). The non-volatile memory includes all forms of nonvolatile memory, including but not limited by way of example to semiconductor memory devices, such as EPROM, EEPROM, ReRAM, STTRAM, FRAM, or other. The intermittent computing layer also regularly restores the information stored on the non-volatile memory. For example, the information is stored in separate memory locations, and the intermittent computing layer is able to find the memory location where the information to restore is located.

In examples, the platform may further comprise the cold-start circuit. The cold-start circuit is connected to the at least one energy source. The cold-start circuit may be configured for, at each restarting, providing an initial supply of energy for starting the microcontroller. After this initial supply, the microcontroller may regulate the energy provided by the at least one energy source, and the platform may be configured for starting the SoC component when the determined level of available energy is stable and regulated, which means that an operation voltage needed (or output voltage) for the SoC is regulated. The cold-start circuit may restart the microcontroller when the level of energy is sufficient, e.g., when the level of energy is higher than a predetermined threshold (which is function of the final application for example and/or of the application layer).

In examples, the cold-start circuit may comprise the storage energy component. The storage energy component may be configured for, after each stopping of the execution of the one or more applications, storing energy from the at least one energy source, the initial supply of energy provided to the microcontroller being the energy also stored in this energy component. Its main function is to start the microcontroller between two interrupts. In particular, the storage energy component allows starting the microcontroller with a certain level of energy (i.e., the storage energy component is used as a buffer of energy). The energy component may be recharged during the interruption periods of executing of the one or more applications. After each restarting of the microcontroller, the microcontroller may be configured for deactivating the cold-start circuit. In that case, the platform may be configured to restart the cold-start circuit before stopping the microcontroller again. Alternatively, the cold-start circuit may remain activated after each restarting of the microcontroller. It may also be recharged during normal system operation, and even contribute to the platform's operation (in terms of energy).

In examples, the platform may be powered by several energy sources. For example, the platform may be powered but not limited to by one or more solar panels, one or more thermoelectric generators (TEG), one or more wind turbines and/or one or more water turbines, and the one or more solar panels may supply power when the solar irradiance is sufficient, while one or more turbines can provide energy when wind or current is present. In that case, the platform may comprise the power multiplexer. The power multiplexer may be positioned between the several energy sources and the rest of the platform (e.g., the DC/DC converters, the microcontroller and/or the cold-start circuit). The power multiplexer may be configured for extracting energy from the several energy sources by time multiplexing the respective power energies of the several energy sources. The power multiplexer may comprise a set of electronic switches configured for selecting and transiting between the several energy sources to a single output energy source (powering the rest of the platform). For example, the power multiplexer may be configured for alternatively selecting the one of the several energy sources powering the platform depending on the respective power energy of each energy source. In the case of availability of the multiple energy sources at a given time, the power multiplexer may be configured for carrying out a time multiplexing between different sources so as to extract the available energy from all sources (handled by the microcontroller).

In examples, the platform may comprise DC/DC converter circuits. The DC/DC converter circuits may be configured for maximum power point tracking (MPPT) and regulating the output voltage of needed for powering the SoC component and the non-volatile memory. The MPPT function handled by the DC/DC converter circuits and controlled by the microcontroller allows to extract at anytime, from the available energy sources, the maximum of power. The DC/DC converters in conjunction with the microcontroller may implement the MPPT function which may generate for all energy sources the optimal conditions to extract the maximum power at a given time. This MPPT function is carried out for all chosen sources through the power multiplexer at a given time. That way, the available ambient energy captured by the used energy sources may be extracted and stored as much as possible in the used energy storage components. Moreover, the DC/DC converters ensure also in conjunction with the microcontroller the voltage regulation needed for normal operation of the SoC and non-volatile memory components.

In examples, the platform may further comprise a Printed Circuit Board (PCB), on which all the electronic components, including e.g. the non-volatile memory, the microcontroller and the SoC component, are assembled and connected together, as known in the art. The PCB may also include a connector configured for being connected to the at least one energy source. The platform may be compact which makes it ideal for use close to sensors and measurements. For example, the platform may be enclosed in a small external housing. For example, the external housing may be of the size of the commercially available platforms such as Raspberry Pi or similar.

In examples, the platform may not comprise the at least one energy source. For example, the platform may be connected to the at least one energy source, e.g., each via a respective supply cable. In other word, the platform may be decoupled from the at least one energy source. Alternatively, the platform may comprise the at least one energy source. In that case, the components of the platform and the at least one energy source may form a single entity.

The computer program may comprise instructions executable by a computer, the instructions implementing the computer-implemented method for programming the application layer of the said platform. The program may be recordable on any data storage medium, including the memory of the computer. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

The method for programming the application layer of the platform is computer-implemented. This means that steps (or substantially all the steps) of the method are executed by at least one computer, or any system alike (e.g., such as a processor of the system). Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

The programming method may comprise a first step allowing to program and embed any application in the application layer. The programming of each application may comprise programming the application from scratch (i.e., writing and describing all the instructions for the application), or adding an existing application already programmed to the application layer. This step may be carried out by a user (e.g., a software/hardware engineer), for example using a known programming interface. Then, the method for programming may comprise automatically adapting each programmed application for intermittent calculation on the platform. This step may comprise modifying the application so that it may run intermittently on the platform. For example, this step may comprise adding checkpoints for backup and/or restore and/or setting energy level limits for each application calculation step. This step is carried out automatically, i.e. without the need for user intervention. The user may not be implied during this step.

With reference to FIG.s 4 to 8, examples of the platform are now discussed.

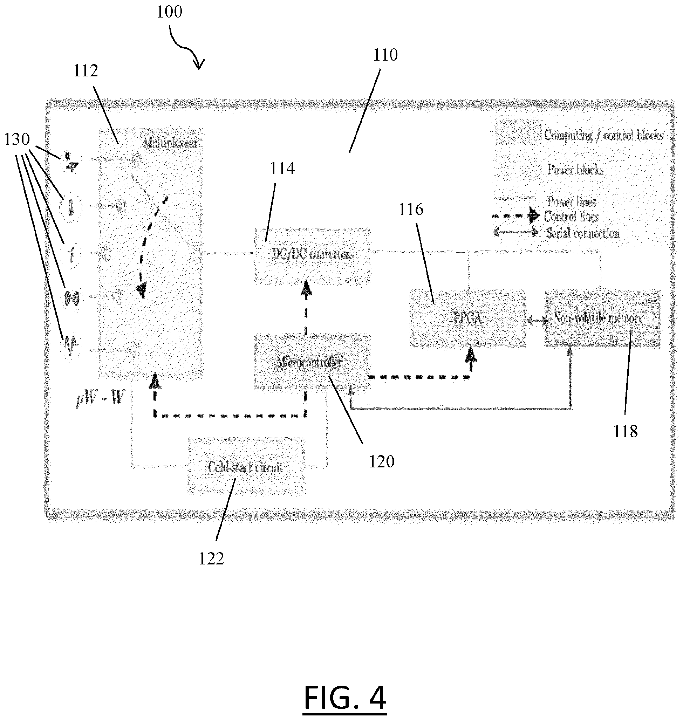

FIG. 4 shows an example of the platform 100. The platform 100 is powered by several energy sources 130. The platform 100 comprises a power multiplexer 112 connected to the several energy sources 130. The power multiplexer 112 is configured for selecting an energy source from the several energy sources 130 and outputting a single output energy source. The platform 100 comprises DC/DC converter circuits 114 taking as input the single output energy source outputted by the power multiplexer 112. The DC/DC converter circuits 114 are configured for managing the single output energy source taken as input and for outputting a regulated output voltage. The platform 100 comprises a SoC component comprising an FPGA 116 and a non-volatile memory 118. The SoC component and the memory 118 are powered by the regulated voltage outputted by the DC/DC converter circuits 114. The platform 100 comprises a microcontroller 120. The microcontroller 120 is configured for controlling the DC/DC converter circuits 114, the power multiplexer 112 and the FPGA 116. The FPGA 116 comprises the application layer and the intermittent computing layer which is configured for executing intermittently the application(s) of the application layer by saving and restoring the information from the application layer on the non-volatile memory 118.

The platform 100 comprises a cold-start circuit 122 which is connected to the several energy sources 130 via the power multiplexer 112. The cold-start circuit 122 is configured for, at each restarting, powering an initial supply of energy for restarting the microcontroller 120. The cold-start circuit 122 is a circuit that ensures the initial supply of energy to start the platform. The purpose of this circuit is to be activated during the start-up phase of the system, to ensure that it starts up and basic functionality but can also be used during normal system operation to ensure the power supply of the entire platform, or at least one of its parts. As soon as optimum conditions have been reached, the cold-start circuit is either deactivated by the platform (in this case by the microcontroller), or switches to normal power supply mode. The platform may use the cold-start circuit in two modes: to start the power supply for the microcontroller part and to ensure its subsequent power supply. This solution is not exclusive and may be combined with the main part of the DC/DC converter block powering the FPGA/SoC circuit.

Several solutions may be used for the realization of the cold-start circuit. The solution may be dependent on the main source of the power supply. In an intermittent computing system powered by a multi-source approach (several energy sources), an energy source - usually the main source delivering the largest amount of energy - may be selected for being connected to the cold-start circuit. Depending on the main power supply solution (TEG generator, PV panel or other), the employed solutions may differ. In a first solution, the cold-start circuit may be equipped with an energy storage solution (such as a supercapacitor). For example, if the main supply source is a PV panel, the cold-start circuit and in particular its energy buffer (i.e., the supercapacitor) may be directly connected to this PV panel via controllable diodes or transistors with known initial values, enabling the energy supply to be established without the use of the microcontroller. This increases the likelihood of recharging the storage elements as quickly as possible. The cold-start block may be also independent of the usual power management, which passes through the called DC-DC conversion stage.

This initial energy input may also be used to activate other elements of the cold-start circuit, for example an auxiliary DC/DC converter driven by an analog circuit generating its own control signal. In this way, the microcontroller benefits from its own completely autonomous power supply chain which, on the one hand, starts up independently as soon as the power supply is sufficient, and to be driven by an independent analog control circuit. Several other solutions are possible for the cold-start part: use of a DC/DC converter-type auxiliary conversion stage; use of charge pump circuits or active or diode-type active elements that do not require control. For converter or charge pump converter or charge pump circuits, a control signal may be generated. For this purpose, analog elements for independent control may be considered.

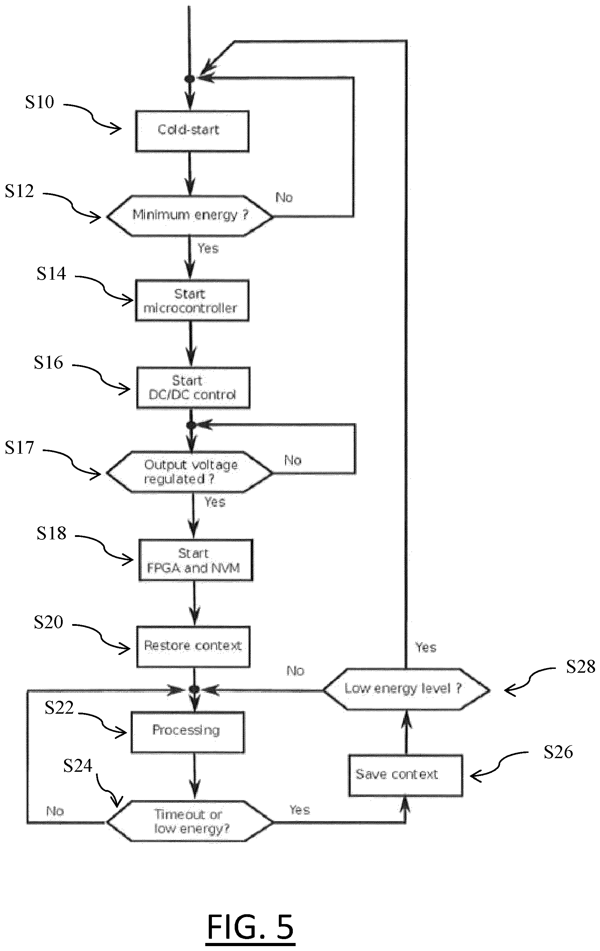

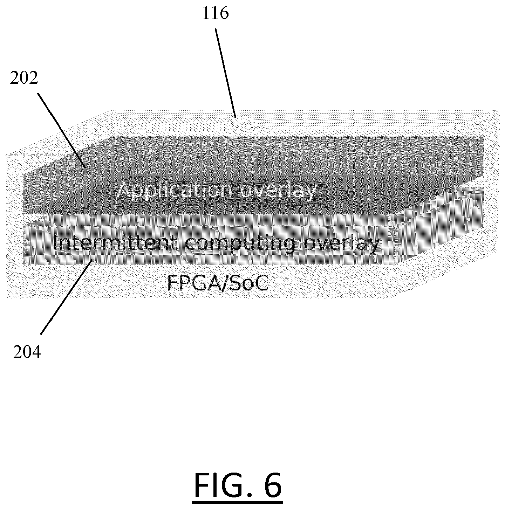

FIG. 5 shows a flowchart of an example of the restarting of the platform. The platform may be configured with instructions for performing, at each restarting of the platform, the following steps. The cold-start circuit may initially be started S10. For example, the cold start circuit may have been started just before the other platform components were shut down. Alternatively, the cold start circuit may always remain started, even when the application(s) are executed. The cold start circuit is configured for monitoring the level of available energy supplied by the energy source(s), and for determining S12 whether level of available energy becomes higher than a minimum predetermined threshold. The cold start circuit waits until the level of available energy becomes higher than this minimum predetermined threshold. At this time, the cold start circuit is configured for starting S14 the microcontroller, which in turn is configured for starting S16 the DC/DC converter circuits. The DC/DC converter circuits are then configured for regulating the energy supplied by the energy source(s). When the voltage is regulated, the platform is configured for starting S18 the FPGA and the non-volatile memory. Then, the intermittent computing layer of the FPGA is configured for restarting the executing of the application(s) of the application layer at the time of the last saving (just before the last stop). To do so, the intermittent computing layer is configured for communicating with the non-volatile memory in order to retrieve S20 the latest calculation information (saved running context). After that, the intermittent computing layer is configured for restarting the execution S22 of the application(s) at the time of the last saving using the retrieved last calculation information.

Then, the intermittent computing layer is configured for monitoring the level of energy available by communication with the microcontroller. The intermittent computing layer continues the execution S22 of the application(s) until the level of energy available remain sufficient (e.g. above a predefined minimum level). When the level of available energy becomes low (i.e., e.g., slightly above or approaching the said predefined minimum level), the intermittent computing layer saves all the new calculation information of the application(s) in case of restarting of the platform. The intermittent computing layer is configured for determining S28 whether the level of available energy remains low (information provided by the microcontroller), and in that case the platform is stopped. Otherwise, the intermittent computing layer may continue the execution S22 of the application(s) while monitoring the level of available energy. After the platform is stopped, the cold-start circuit repeats the monitoring of the level of available energy supplied by the energy source(s), and the restarting of the platform when it becomes sufficient (e.g., higher than the minimum predetermined threshold).

FIG.s 6 and 7 illustrate an example of the reprogrammable logic of the SoC component. In this example, the reprogrammable logic is an FPGA 116. The FPGA 116 comprises the application layer 202 comprising operational blocks implementing one or more applications. The application layer 202 is defined by the user. The FPGA 116 also comprises the intermittent computing layer 204 configured for executing intermittently the one or more applications of the application layer depending on the determined level of available energy. The regularly intermittent computing layer 204 is configured for saving and restoring information from the application layer during the execution of the one or more applications on the non-volatile memory. The intermittent computing layer 204 is configured for executing intermittently the one or more applications of the application layer by performing the following functions. The intermittent computing layer 204 is configured for communicating with the microcontroller to obtain the determined level of available energy. The intermittent computing layer 204 is also configured for checkpointing and context saving. The checkpointing may comprise determining checkpoints during the execution of each application, the information about the execution being saved and/or retrieved at the time of these determined checkpoints. The context saving may comprise determining the information about the execution to be saved (i.e., the context) and initiating the saving the determined information and its sending to the memory. The intermittent computing layer 204 is also configured for context restoring. The context restoring may comprise initiating the last information saved restoring from the memory, receiving these data from the memory and sending them to the application layer 202 together with an order to restart the application(s) at the time of the context saving. The intermittent computing layer 204 may perform the context saving and context restoring functions by communicating with the non-volatile memory.

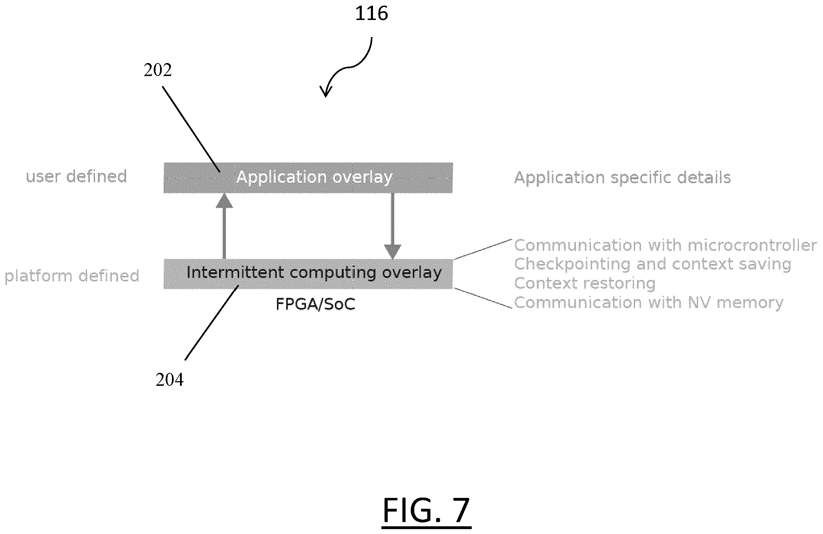

The FPGA/SoC circuit used has the particularity of being configured to the deployment and acceleration of various types of applications. To this end, two main layers are proposed, as illustrated in the figures: the intermittent computing layer (or overlay), whose main role is to hide all the details of the implementation details of the intermittent computing part, namely the communication with the microcontroller managing the energy supply and having information on the current status of available energy levels. The checkpointing and data storage according to the available energy levels: the higher the energy levels, the less frequent the data backup and restoration of the context after a reboot; the communication with all non-volatile storage media. These operations are described and presented in the FIG. 7. The second layer is the application layer (or overlay), whose main role is to implement application-specific details. This application layer may be completely transparent and does not perform the operations which are reserved for the Intermittent computing overlay. An exchange between the two layers is also regular and dictated by the Intermittent Computing Overlay layer, which can also slow down, stop or speed up computing in the application layer. The Intermittent Computing Overlay may have information about the data to be saved in the application layer.

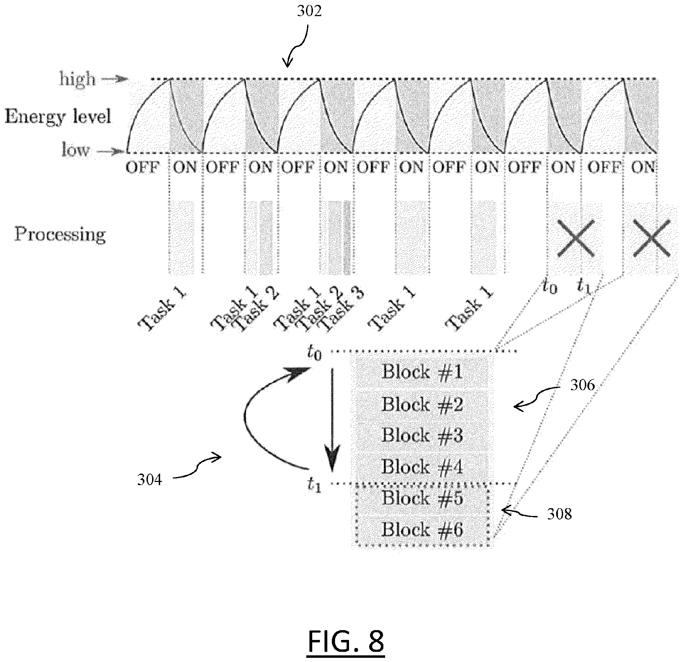

FIG. 8 illustrates an example of intermittent computing by the platform. The figure shows the level of available energy 302 determined by the microcontroller. As illustrated, the platform is "ON" (running) when the level of energy available 302 reaches a first predetermined energy level (i.e., the one or more applications are executed during this "ON" period), and "OFF" (shut down) when the level of energy available 302 becomes lower than a second predetermined energy level (i.e., the one or more applications are stopped during this "OFF" period). The intermittent computing layer executes intermittently the one or more applications of the application layer depending on the determined level of available energy.

When an application runs a complex function 304, e.g., including six blocks, and the level of energy available becomes lower than the second predetermined energy level, e.g., after the block #4 in this example, the platform stops the executing of the application, and restarts the executing of the function for the remaining two blocks (block #5 and block #6) when the available energy level becomes sufficient again (i.e., higher than the first predetermined energy level in this example). To do so, the platform is configured for saving the information about the executing of the function regularly on the non-volatile memory, e.g., each time the application finishes executing one of the blocks in this example, the platform may save the results of the executed block on the non-volatile memory.

## Claims

1. A platform (100) for intermittent computing powered by at least one energy source (130), the platform comprising:
• a non-volatile memory (118);
• a microcontroller (120) configured for power managing the at least one energy source and for determining a level of available energy;
• a System-on-Chip (SoC) component comprising a reprogrammable logic (116), the reprogrammable logic comprising:
∘ an application layer (202) comprising operational blocks implementing one or more applications; and
∘ an intermittent computing layer (204) configured for executing intermittently the one or more applications of the application layer depending on the determined level of available energy by regularly saving and restoring information from the application layer during the execution of the one or more applications on the non-volatile memory.

2. The platform of claim 1, wherein the intermittent computing layer is further configured for communicating with the microcontroller to obtain the determined level of available energy.

3. The platform of claim 1 or 2, wherein the saving is performed regularly at a given frequency, the given frequency depending on the level of available energy determined by the microcontroller.

4. The platform of any of claims 1 to 3, wherein the executing intermittently of the one or more applications comprises iteratively stopping and restarting the executing of the one or more applications, each restarting comprising:
• determining the latest information about the executing of the one or more applications saved on the non-volatile memory; and
• providing the determined latest information to the application layer so as to restart the executing of the one or more applications at the time of the last saving.

5. The platform of claim 4, wherein the platform further comprises:
• a cold-start circuit (122) connected to the at least one energy source, the cold-start circuit being configured for, at each restarting, providing an initial supply of energy for restarting the microcontroller.

6. The platform of claim 5, wherein the cold-start circuit comprises a storage energy component configured for, after each stopping of the executing of the one or more applications, storing energy from the at least one energy source, the initial supply of energy powered to the microcontroller being the energy stored in the energy component.

7. The platform of claim 5 or 6, wherein, after the restarting of the microcontroller, the microcontroller is configured for starting the SoC component when the determined level of available energy is stable and regulated.

8. The platform of any of claims 5 to 7, wherein the cold-start circuit is deactivated by the microcontroller after each restarting of the microcontroller.

9. The platform of any of claims 5 to 7, wherein the cold-start circuit remains activated after each restarting of the microcontroller, the cold-start circuit being configured for participating to the power management of the at least one energy source.

10. The platform of any of claims 1 to 9, wherein the intermittent computing layer is further configured for slowing down or speeding up calculation in the application layer for the executing of the one or more applications depending on the determined level of available energy.

11. The platform of any of claims 1 to 10, wherein the at least one energy source comprises several energy sources, the platform further comprising:
• a power multiplexer (112) connected to the several energy sources, the power multiplexer being configured for extracting energy from the several energy sources by time multiplexing them.

12. The platform of any of claims 1 to 11, wherein the platform further comprises DC/DC converter circuits (114) configured for maximum power point tracking and regulating a voltage of the energy powering the SoC component and the non-volatile memory.

13. The platform of any of claims 1 to 12, wherein the reprogrammable logic is an FPGA component.

14. A computer program comprising instructions, which, when executed by a computer, cause the computer to carry out a computer-implemented method for programming the application layer of a platform according to any of claims 1 to 13.

15. A computer readable storage medium having recorded thereon the computer program of claim 14.
